# EUROPÄISCHE PATENTANMELDUNG

(11) **EP 1 998 109 A2**
(43) Veröffentlichungstag der Anmeldung: **03.12.2008**
(21) Anmeldenummer: 08150509.1
(22) Anmeldetag: 22.01.2008
(51) Int. Cl.: F22B 1/00

(54) **Verfahren zum Betreiben einer solarthermischen Prozesswärmeanlage und solarthermische Prozesswärmeanlage**

(30) Priorität: 24.01.2007 DE 102007005562
(71) Anmelder: Deutsches Zentrum für Luft- und Raumfahrt e.V., 51147 Köln (DE)
(72) Erfinder: Eck, Markus, 71229, Leonberg (DE); Hirsch, Tobias, 70378, Stuttgart (DE); Koch, Stephan, 8050 Zürich (CH)
(74) Vertreter: Hoeger, Stellrecht & Partner Patentanwälte

(57) **Zusammenfassung**

Es wird ein Verfahren zum Betreiben einer solarthermischen Prozesswärmeanlage vorgeschlagen, bei dem ein Wärmeträgermedium in einem Erhitzungsabschnitt durch Solarstrahlung unter Aufnahme von Wärme erhitzt wird, wobei der Erhitzungsabschnitt eine Mehrzahl von Erhitzungssträngen aufweist, auf die das Wärmeträgermedium verteilt wird, wobei an den Erhitzungssträngen oder an einer Mehrheit der Erhitzungsstränge jeweils eine Zustandsgröße des Wärmeträgermediums gemessen wird, ein Mittelwert der gemessenen Zustandsgröße über die Erhitzungsstränge berechnet wird, und Massenstrom-Regelventile in den jeweiligen Erhitzungssträngen in Abhängigkeit von der jeweiligen Abweichung zwischen der gemessenen Zustandsgröße des strömenden Wärmeträgermediums in dem jeweiligen Erhitzungsstrang und dem berechneten Mittelwert angesteuert werden.

## Beschreibung

Die Erfindung betrifft ein Verfahren zum Betreiben einer solarthermischen Prozesswärmeanlage, bei dem ein Wärmeträgermedium in einem Erhitzungsabschnitt durch Solarstrahlung unter Aufnahme von Wärme erhitzt wird, wobei der Erhitzungsabschnitt eine Mehrzahl von Erhitzungssträngen aufweist, auf die das Wärmeträgermedium verteilt wird.

Die Erfindung betrifft ferner eine solarthermische Prozesswärmeanlage, umfassend einen Erhitzungsabschnitt, in dem ein Wärmeträgermedium durch Solarstrahlung unter Aufnahme von Wärme erhitzbar ist, wobei der Erhitzungsabschnitt eine Mehrzahl von parallel geschalteten Erhitzungssträngen aufweist.

Beispiele solarthermischer Prozesswärmeanlagen sind solarthermische Kraftwerke oder solarthermische Dampferzeugungsanlagen.

In solarthermischen Kraftwerken wird ein Wärmeträgermedium durch Solarstrahlung erhitzt. Die thermische Energie des Wärmeträgermediums wird (teilweise) in einer oder mehreren Turbinen in mechanische Energie umgewandelt. An einem oder mehreren Generatoren wird die mechanische Energie in elektrische Energie umgewandelt.

Es gibt solarthermische Kraftwerke, bei welchen überhitzter Dampf Dampfturbinen zugeführt wird, und solarthermische Kraftwerke, welche Gasturbinen aufweisen.

In der Veröffentlichung "Dynamische Systemsimulation und Auslegung des Abscheidesystems für die solare Direktverdampfung in Parabolrinnenkollektoren" von T. Hirsch, Fortschrittsberichte VDI, Reihe 6, Nr. 535, Düsseldorf: VDI-Verlag 2005, ISBN 3-18-353506-8 sind Parabolrinnenkraftwerke mit Direktverdampfung beschrieben.

Aus der DE 196 23 457 A1 ist ein Verfahren zum Betreiben eines Solarkraftwerks mit wenigstens einem solaren Dampferzeuger bekannt, bei dem die Restfeuchte von Nassdampf an einem Ausgang des solaren Dampferzeugers in Abhängigkeit von der Solarstrahlung gesteuert wird.

Aus der DE 101 52 971 C1 ist ein Regelungsverfahren für ein solarthermisches Kraftwerk bekannt, bei welchem in einem Solarkollektorfeld aus flüssigem Wärmeübertragungsmedium Dampf erzeugt wird und dieser Dampf einer Dampfturbine zugeführt wird. Flüssiges Wärmeübertragungsmedium ist zur Regelung der Temperatur des der Dampfturbine zugeführten Dampfes in eine Sammelleitung des Solarkollektorfelds zur Dampfturbine einspritzbar und/oder Dampf ist aus der Sammelleitung einer Versorgungsleitung flüssiges Wärmeübertragungsmedium zum Solarkollektorfeld zur Vorwärmung dieses Wärmeübertragungsmediums zuführbar.

Der Erfindung liegt die Aufgabe zugrunde, ein Verfahren der eingangs genannten Art und eine solarthermische Prozesswärmeanlage der eingangs genannten Art bereitzustellen, mit dem bzw. bei der man auch bei a priori unbekannten Betriebsbedingungen eine Vergleichmäßigung der Austrittstemperaturen an den Erhitzungssträngen mit geringer Schwankungsbreite erhält.

Diese Aufgabe wird bei dem eingangs genannten Verfahren erfindungsgemäß dadurch gelöst, dass an Erhitzungssträngen jeweils eine Zustandsgröße des Wärmeträgermediums gemessen wird, dass ein Mittelwert von gemessenen Zustandsgrößen über Erhitzungsstränge berechnet wird, und dass Massenstrom-Regelventile in den jeweiligen Erhitzungssträngen in Abhängigkeit von der jeweiligen Abweichung zwischen der gemessenen Zustandsgröße des strömenden Wärmeträgermediums in dem jeweiligen Erhitzungsstrang und dem berechneten Mittelwert angesteuert wird.

Es ist grundsätzlich möglich, dass der Eingangsmassenstrom in die Erhitzungsstränge a priori nicht bekannt ist und dass die Druckverluste in den Erhitzungssträngen nicht bekannt sind. Ein solcher Fall liegt beispielsweise in Überhitzungssträngen eines Überhitzungsabschnitts eines solarthermischen Kraftwerks vor. Druckverluste sind abhängig von Leitungslängen und von den Einstrahlungsbedingungen sowie dem jeweiligen Massenstrom. Die Situation kann dabei in unterschiedlichen Erhitzungssträngen unterschiedlich sein.

Durch die erfindungsgemäße Lösung lässt sich über die Mittelwertbildung über die Erhitzungsstränge (oder zumindest über eine Mehrheit der Erhitzungsstränge) eine Vergleichmäßigung der Zustandsgrößen in den unterschiedlichen Strängen auch bei stark unterschiedlichen Einstrahlungsbedingungen für die Erhitzungsstränge erreichen.

Erfindungsgemäß wird ein Konzept bereitgestellt, wie sich ein Gesamtmassenstrom auf die Erhitzungsstränge verteilen lässt und sich die einzelnen Teilströme unter Vergleichmäßigung der Zustandsgröße (wie beispielsweise Temperatur oder Dampfgehalt) regeln lassen.

Eine Messung der Massenströme an sich ist bei dem erfindungsgemäßen Verfahren nicht erforderlich. Die Massenströme werden über die Massenstrom-Regelventile manipuliert, ohne dass deren absolute Größe bekannt sein muss.

Es hat sich gezeigt, dass sich mit dem erfindungsgemäßen Verfahren auch bei starken Transienten in den Einstrahlungsbedingungen und im Gesamtmassenstrom ein stabilisierendes Verhalten erreichen lässt, ohne dass eine genaue Kenntnis der Einstrahlungsbedingungen und des Eingangsmassenstroms in den Erhitzungsabschnitt notwendig ist. Es lässt sich eine geringe Sensitivität gegenüber Parametervariationen erreichen.

Das erfindungsgemäße Verfahren wirkt auch unterstützend, wenn eine zusätzliche Regelung über Einspritzung von flüssigem Wärmeträgermedium vorgesehen ist.

Durch das erfindungsgemäße Verfahren lassen sich die Massenstrom-Regelventile unterschiedlicher Erhitzungsstränge kooperierend zielführend betreiben. Die Erhitzungsstränge "unterstützen" sich gewissermaßen bei der Ausregelung einer asymmetrischen Einstrahlungsstörung.

Durch das erfindungsgemäße Verfahren ist es auch möglich, die Maximaltemperatur an jedem Erhitzungsstrang zu begrenzen.

Die Abweichung von dem Mittelwert kann beispielsweise über Differenzbildung, Quotientenbildung, eine Minimalwert-Maximalwert-Betrachtung usw. charakterisiert werden. Die entsprechende Abweichungsgröße wird insbesondere in einem Prozessleitrechner berechnet.

Das erfindungsgemäße Konzept kann beispielsweise auf den Überhitzerabschnitt eines solarthermischen Kraftwerks mit Direktverdampfung oder einer Dampferzeugungsanlage angewandt werden. In diesem Fall stammt der Gesamtmassenstrom insbesondere von einem zentralen Flüssigkeits-Dampf-Abscheider.

Es ist beispielsweise auch möglich, das erfindungsgemäße Konzept an einem Turmreceiver zu realisieren, wobei das Wärmeträgermedium hier gasförmig sein kann.

Die Zustandsgröße an einem Erhitzungsstrang kann einmal (pro definiertem Zeitintervall) oder mehrfach gemessen werden. Sie kann auch an räumlich beabstandeten Orten eines Erhitzungsstrangs gemessen werden.

Es ist dabei grundsätzlich möglich, dass jeder Erhitzungsstrang des Erhitzungsabschnitts ein Massenstrom-Regelventil aufweist oder dass nur eine Untermenge der Erhitzungsstränge mit einem Massenstrom-Regelventil versehen sind. Es ist ferner möglich, dass bei der Mittelwertbildung der Zustandsgröße alle Erhitzungsstränge berücksichtigt werden oder nur ein Teil der Erhitzungsstränge berücksichtigt wird.

Es ist insbesondere vorgesehen, dass pro Erhitzungsstrang, sofern ein Massenstrom-Regelventil vorhanden ist, genau ein Massenstrom-Regelventil vorgesehen wird. Dadurch lässt sich auf einfache Weise insbesondere eine Proportional regelung realisieren.

Günstig ist es, wenn das Wärmeträgermedium beim Durchströmen des Erhitzungsabschnitts gasförmig oder dampfförmig oder flüssig oder ein Mehrphasengemisch ist. Es kann dadurch sensible und/oder latente Wärme aufnehmen.

Es ist vorgesehen, dass das Wärmeträgermedium aus einem Grundstrom (Eingangsmassenstrom) in parallele Teilströme aufgeteilt wird, wobei die jeweiligen Teilströme jeweilige Erhitzungsstränge durchströmen. In den jeweiligen Erhitzungssträngen erfolgt dann eine Aufheizung des Wärmeträgermediums. Dadurch erhält man gewissermaßen eine parallele Aufheizung von Teilströmen.

Ganz besonders vorteilhaft ist es, wenn ein dem Erhitzungsabschnitt zugeordneter Regelkreis vorgesehen ist, bei dem Stellgrößen Ventilgrößen der Massenstrom-Regelventile sind und Regelgrößen die jeweiligen Zustandsgrößen des Wärmeträgermediums in den jeweiligen Erhitzungssträngen sind. Über die Ventileinstellung und insbesondere einen Ventilhub lässt sich der Massenstrom in dem jeweiligen Erhitzungsstrang einstellen. Die Einstellung erfolgt derart, dass bestimmte Zustandsgrößenwerte des Wärmeträgermediums an einem Austritt aus dem Erhitzungsstrang vorliegen.

Es ist ganz besonders vorteilhaft, wenn eine Sollgröße für die Regelgrößen der Mittelwert der Zustandsgrößen ist. Der Mittelwert ist beispielsweise ein arithmetischer Mittelwert oder ein gewichteter Mittelwert. Dadurch lässt sich eine Einregelung erreichen, ohne dass die Sollgröße an sich absolut bekannt sein muss. Der Mittelwert wird zeitlich fortlaufend ermittelt. Dadurch erfolgt eine zeitliche Anpassung der Sollgröße für die Regelgrößen.

Es hat sich als günstig erwiesen, wenn der Regelkreis den jeweiligen Erhitzungssträngen zugeordnete PI-Regler umfasst, durch welche die Massenstrom-Regelventile angesteuert werden. Durch solche Proportional-Integral-Regler ergibt sich eine einfache Regelbarkeit.

Günstig ist es, wenn die Zustandsgrößen an unterschiedlichen Erhitzungssträngen an einander entsprechenden Stellen der Erhitzungsstränge gemessen werden. Dadurch ist garantiert, dass gleiche Verhältnisse an unterschiedlichen Erhitzungssträngen gemessen werden, so dass der Mittelwert der Zustandsgröße eine anstrebenswerte Sollgröße ist. Insbesondere werden die Zustandsgrößen bezogen auf einander entsprechende Solarkollektoreinrichtung unterschiedlicher Erhitzungsstränge gemessen.

Günstigerweise wird an dem jeweiligen Erhitzungsstrang die Zustandsgröße des strömenden Wärmeträgermediums an oder in der Nähe eines Austritts einer Solarkollektoreinrichtung gemessen. Dadurch ist eine einfache Messbarkeit realisiert.

Es ist günstig, wenn an dem jeweiligen Erhitzungsstrang die Zustandsgröße des strömenden Wärmeträgermediums nach einer vorletzten Solarkollektoreinrichtung gemessen wird. Dadurch lässt sich der Austrittszustandsgrößenwert des Wärmeträgermediums aus dem entsprechenden Erhitzungsstrang auf einfache Weise regeln.

Insbesondere wird an dem jeweiligen Erhitzungsstrang die Zustandsgröße des strömenden Wärmeträgermediums an oder in der Nähe eines Austrittsendes des Erhitzungsstrangs gemessen. Dadurch lässt sich beispielsweise sicherstellen, wenn das Wärmeträgermedium überhitzter Dampf ist, dass die Flüssigkeitsanteile in dem Wärmeträgermedium bei der Zustandsgrößenmessung minimiert sind. Wenn eine Einspritzung von flüssigem Wärmeträgermedium vorgesehen ist, dann wird günstigerweise die Zustandsgröße des strömenden Wärmeträgermediums vor der letzten Einspritzeinrichtung gemessen.

Bei der erfindungsgemäßen Lösung wird eine Massenstromregelung in den Erhitzungssträngen ohne Massenstrommessung durchgeführt, wobei der Massenstrom über die Massenstrom-Regelventile manipuliert wird.

Es kann vorgesehen sein, dass die Massenstrom-Regelventile in einer Ausgangsposition gestartet werden, bei welcher die Ventileinstellung ein Teilhub eines möglichen Gesamthubs oder ein Gesamthub ist. Dadurch lässt sich sicherstellen, dass sich die Massenstrom-Regelventile zur Veränderung der Massenstromverteilung gegenläufig bewegen können, das heißt sowohl ein weiteres Aufmachen als auch ein Zumachen möglich ist. Der Gesamthub ist die maximale Öffnung des entsprechenden Massenstrom-Regelventils, bei dem dieses komplett geöffnet ist. Es ist dabei grundsätzlich möglich, dass der Arbeitspunkt der Ventilöffnung langsam geregelt wird.

Es ist insbesondere vorgesehen, dass die Zustandsgröße des Wärmeträgermediums, welche gemessen wird und deren Mittelwert bestimmt wird, die Temperatur des Wärmeträgermedium ist. Es lassen sich dabei sowieso vorhandene Temperaturmessstellen verwenden.

Es kann auch vorgesehen sein, wenn das Wärmeträgermedium mehrphasig ist, dass die Zustandsgröße, welche gemessen wird und deren Mittelwert berechnet wird, der Dampfgehalt im Wärmeträgermedium ist.

Es kann vorgesehen sein, dass an einem oder mehreren Erhitzungssträngen der Massenstrom durch mindestens eine Blende reduziert wird. Dadurch lässt sich ein Arbeitspunkt für den Massenstrom pro Erhitzungsstrang einstellen.

Insbesondere wird die jeweilige mindestens eine Blende an oder in der Nähe eines einphasig durchströmten Bereichs des zugeordneten Erhitzungsstrangs angeordnet. Bei einem Überhitzungsstrang wird die Anordnung an oder in der Nähe eines Austrittsendes bevorzugt. Bei einem Verdamferstrang wird die Anordnung an oder in der Nähe eines Eintrittsendes bevorzugt. Dadurch lässt sich auf einfache Weise der Massenstrom in dem jeweiligen Erhitzungsstrang reduzieren.

Es kann vorgesehen sein, dass an dem jeweiligen Erhitzungsstrang (flüssiges oder gasförmiges) Wärmeträgermedium eingespritzt wird. Dadurch lässt sich für eine zusätzliche Zustandsgrößenregelung und insbesondere Temperaturregelung sorgen, insbesondere wenn das Wärmeträgermedium kein einphasigflüssiges Medium ist. Es hat sich gezeigt, dass sich eine Regelung über Einspritzen von flüssigem Wärmeträgermedium und die Regelung, welche auf der Mittelwertbildung basiert, sich nur wenig beeinflussen. Diese beiden Regelungen wirken unterstützend.

Es kann dabei eine Einspritzung an allen Erhitzungssträngen vorgesehen sein, wobei pro Erhitzungsstrang eine oder mehrere Einspritzstellen vorgesehen sein können. Es ist auch möglich, dass eine Einspritzung nur an einer Untermenge der Erhitzungsstränge (mit einer oder mehreren Erhitzungsstellen) vorgesehen wird.

Insbesondere wird durch die Einspritzung die Zustandsgröße und/oder eine Endtemperatur des Wärmeträgermediums beim Austritt aus dem Erhitzungsstrang geregelt. Dadurch lässt sich die Variation der Zustandsgrößen wie der Temperatur bei schwankenden solaren Einstrahlungsbedingungen erniedrigen.

Es ist günstig, wenn die Einspritzung vor einer letzten Solarkollektoreinrichtung des Erhitzungsstrangs durchgeführt wird. Die Einspritzung muss vor einer Solarkollektoreinrichtung durchgeführt werden, damit eine Verdampfung des flüssigen Wärmeträgermediums möglich ist. Durch die Einspritzung vor der letzten Solarkollektoreinrichtung lässt sich die Zustandsgröße und insbesondere Temperatur des austretenden Wärmeträgermediums regeln und auch die Maximaltemperatur an jedem Erhitzungsstrang begrenzen.

Insbesondere erfolgt die Einspritzung nach der Messung der Zustandsgröße, welche in die Mittelwertbildung eingeht. Dadurch beeinflussen sich die beiden Regelkonzepte höchstens wenig und es ist sogar eine gegenseitige Unterstützung realisiert.

Günstigerweise erfolgt die Messung der Zustandsgröße vor der Einspritzung und vorzugsweise erfolgt die Messung der Zustandsgröße vor der ersten Einspritzstelle in einem Erhitzungsstrang.

Insbesondere erfolgt die Einspritzung über einen Regelkreis, das heißt sie erfolgt geregelt.

Es ist dann günstig, wenn eine Regelgröße des Regelkreises die Zustandsgröße und/oder die Temperatur des Wärmeträgermediums (beim Austritt aus dem jeweiligen Erhitzungsstrang) ist und eine Stellgröße eine Einspritzmenge ist.

Ganz besonders vorteilhaft ist es, wenn die Regelung so durchgeführt wird, dass ein Massenstrom-Regelventil bei stationären Bedingungen eine vorgegebene Einstellung aufweist. Dazu ist insbesondere ein langsamer Rückführregler vorgesehen, welcher Teil des Regelkreises ist. Dieser sorgt dafür, dass ein jeweiliges Massenstrom-Regelventil auf einen bestimmten Wert (beispielsweise einen mittleren Wert) gefahren wird, wenn eine stationäre Einregelung erreicht wird. Dadurch wird eine gerichtete Regelung mit einer optimierten Einstellung bei stationären Bedingungen erreicht.

Günstig ist es, wenn der jeweilige Erhitzungsstrang eine oder mehrere Solarkollektoreinrichtungen umfasst. Diese werden von dem Wärmeträgermedium durchströmt und es erfolgt dabei eine Aufheizung.

Bei einem Ausführungsbeispiel ist die mindestens eine Solarkollektoreinrichtung als Brennlinienkollektor ausgebildet. Ein Brennlinienkollektor weist einen linienhaften Fokusbereich auf. Beispiele von Brennlinienkollektoren sind Parabolrinnenkollektoren und lineare Fresnelkollektoren.

Es ist dabei grundsätzlich möglich, dass die mindestens eine Solarkollektoreinrichtung eine Turmreceivereinrichtung ist oder ein Segment einer Turmreceivereinrichtung ist. Bei einer Turmreceivereinrichtung wird beispielsweise über Heliostate Solarstrahlung auf einen zentralen Receiver gerichtet. Ein Segment einer Turmreceivereinrichtung ist ein Teilbereich dieser.

Bei einem Ausführungsbeispiel ist der Erhitzungsabschnitt ein Überhitzungsabschnitt für dampfförmiges Wärmeträgermedium. In dem Überhitzungsabschnitt wird bereits dampfförmiges Wärmeträgermedium überhitzt, wobei sensible Wärme aufgenommen wird. Bei einem weiteren Ausführungsbeispiel ist der Erhitzungsabschnitt ein Verdampfungsabschnitt für Wärmeträgermedium, welches flüssig ist oder einen Flüssigkeitsanteil aufweist.

Das erfindungsgemäße Konzept lässt sich vorteilhafterweise einsetzen, wenn der Gesamtstrom an Wärmeträgermedium, welcher dem Erhitzungsabschnitt bereitgestellt wird, von einer zentralen Sammeleinrichtung (wie beispielsweise von einem oder mehreren Flüssigkeits-Dampf-Abscheidern) bereitgestellt wird. Der dabei bereitgestellte Gesamtstrom ist per se nicht bekannt und unterliegt zeitlichen Schwankungen, welche unter anderem auf schwankende Einstrahlungsbedingungen an einem Verdampferabschnitt zurückzuführen sind.

Die eingangs genannte Aufgabe wird bei der eingangs genannten solarthermischen Prozesswärmeanlage erfindungsgemäß dadurch gelöst, dass an den Erhitzungssträngen oder an einer Mehrheit von Erhitzungssträngen jeweils ein Massenstrom-Regelventil angeordnet ist, dass den Erhitzungssträngen jeweils ein oder mehrere Zustandsgrößensensoren zur Messung einer Zustandsgröße von strömendem Wärmeträgermedium zugeordnet sind, dass eine Regelungseinrichtung vorgesehen ist, durch welche die Massenstrom-Regelventile ansteuerbar sind, und dass eine Mittelwertbildungseinrichtung vorgesehen ist, durch welche eine Mittelwert von gemessenen Zustandsgrößen über Erhitzungsstränge berechenbar ist, wobei die Ansteuerung des Massenstrom-Regelventils eines jeweiligen Erhitzungsstrangs abhängig ist von der Zustandsgrößenabweichung zwischen der jeweils gemessenen Zustandsgröße des Wärmeträgermediums in dem jeweiligen Erhitzungsstrang und dem berechneten Mittelwert über die Erhitzungsstränge.

Durch die erfindungsgemäße solarthermische Prozesswärmeanlage lässt sich das erfindungsgemäße Verfahren realisieren.

Eine erfindungsgemäße solarthermische Prozesswärmeanlage lässt sich mit geringer Variationsbreite der Zustandsgröße (beispielsweise die Temperatur) des Wärmeträgermediums, welches beispielsweise einer Generatoreinrichtung bereitgestellt wird, betreiben. Dadurch erhält man einen hohen Wirkungsgrad.

Die erfindungsgemäße solarthermische Prozesswärmeanlage kann ein Kraftwerk mit Direktverdampfung sein oder beispielsweise auch ein Kraftwerk, bei dem ein gasförmiges Wärmeträgermedium eingesetzt wird.

Insbesondere sind Eingänge der Mittelwertbildungseinrichtung mit Zustandsgrößensensoren verbunden. Die Zustandsgrößensensoren der Erhitzungsstränge stellen ihre gemessenen Werte der Mittelwertbildungseinrichtung bereit, die den Mittelwert über alle oder einen Teil der Erhitzungsstränge berechnen kann.

Ferner günstig ist es, wenn Ausgänge der Mittelwertbildungseinrichtung mit den Erhitzungssträngen zugeordneten Reglern verbunden sind. Diese können dann aufgrund der bereitgestellten Information für eine entsprechende Ansteuerung der Massenstrom-Regelventile sorgen.

Es kann vorgesehen sein, dass die Zustandsgrößensensoren Temperatursensoren sind. Dies ist insbesondere vorteilhaft, wenn das Wärmeträgermedium einphasig ist. Es lassen sich auch sowieso vorhandene Temperaturmessstellen verwenden.

Es ist beispielsweise auch möglich, dass die Zustandsgrößensensoren Dampfgehaltsensoren sind, wenn das Wärmeträgermedium ein Mehrphasengemisch ist.

Günstigerweise ist eine Verteilungseinrichtung zur Aufteilung eines Gesamtstroms in Teilströme zur Durchströmung der Erhitzungsstränge vorgesehen. Die Teilströme sind parallele Ströme, wobei der Gesamtmassenstrom a priori nicht bekannt zu sein braucht, um eine Massenstromregelung durchführen zu können.

Es kann vorgesehen sein, dass der Verteilungseinrichtung ein oder mehrere Flüssigkeits-Dampf-Abscheider vorgeschaltet sind.

Insbesondere ist der Flüssigkeits-Dampf-Abscheider ein zentraler Abscheider, welcher einer Mehrzahl von Verdampfersträngen zugeordnet ist. Die Verdampferstränge können dabei selber Solarkollektoreinrichtungen umfassen. Dadurch ist der von dem Flüssigkeits-Dampf-Abscheider bereitgestellte Wärmeträgermedium-Massenstrom an Dampf a priori unbekannt, da er von den Einstrahlungsbedingungen abhängt.

Es kann insbesondere vorgesehen sein, dass der Flüssigkeits-Dampf-Abscheider ein Abscheider einer Rezirkulationseinrichtung der Verdampferstränge ist.

Günstig ist es, wenn die Zustandsgrößensensoren unterschiedlicher Erhitzungsstränge an einander entsprechenden Stellen angeordnet sind. Dadurch wird die Vergleichmäßigung der Zustandsgrößen über die Erhitzungsstränge erleichtert, da bei der Zustandsgrößenmessung äquivalente Verhältnisse vorliegen.

Insbesondere ist ein Zustandsgrößensensor eines Erhitzungsstrangs nach einem Ausgangs einer vorletzten Solarkollektoreinrichtung angeordnet. Vorteilhaft ist es, wenn ein Temperatursensor an einem Erhitzungsstrang an oder in der Nähe eines Endes des Erhitzungsstrangs angeordnet ist. Dadurch lässt sich beispielsweise sicherstellen, dass der Flüssigkeitsanteil in strömendem Wärmeträgermedium minimiert ist. Wenn der Erhitzungsstrang eine Einspritzeinrichtung aufweist, kann eine Anordnung des Zustandsgrößensensors vor der letzten Solarkollektoreinrichtung vorteilhaft sein.

Es ist ferner günstig, wenn ein Zustandsgrößensensor an einem Erhitzungsstrang an oder in der Nähe eines Austrittsendes des Erhitzungsstrangs angeordnet ist. Dadurch lässt sich die Zustandsgröße unter Minimierung weiterer Einflüsse bestimmen. Wenn beispielsweise das Wärmeträgermedium ein Dampf ist, ist bei dieser Anordnung eines Zustandsgrößensensors der Flüssigkeitsgehalt bei der Messung der Zustandsgröße minimiert.

Ganz besonders vorteilhaft ist es, wenn ein erster Regelkreis vorgesehen ist, über welchen die Massenstrom-Regelventile angesteuert sind.

Es ist zusätzlich möglich, dass einem Erhitzungsstrang mindestens eine Einspritzeinrichtung mit einer oder mehreren Einspritzstellen für (flüssiges oder gasförmiges) Wärmeträgermedium zugeordnet ist. Dadurch lässt sich im gewissen Rahmen, zusätzlich zu der Massenstrom-Regelung, die Zustandsgröße und/oder die Temperatur des Wärmeträgermediums beim Austritt aus den Erhitzungssträngen regeln.

Insbesondere umfasst die mindestens eine Einspritzeinrichtung mindestens einen Regler, durch welchen ein zweiter Regelkreis gebildet ist, durch den die Einspritzung von flüssigem Wärmeträgermedium regelbar ist. Durch die Einspritzung von (flüssigem oder gasförmigem) Wärmeträgermedium lässt sich eine Kühlung erreichen.

Günstigerweise ist die Einspritzeinrichtung eines jeweiligen Erhitzungsstrangs einem Zustandsgrößensensor des Erhitzungsstrangs, welcher Zustandsgrößenwerte zur Mittelwertbildung bereitstellt, nachgeschaltet. Dadurch wird das Wärmeträgermedium, für welches die Zustandsgröße zur Mittelwertbildung ermittelt wird, durch die Einspritzung nicht beeinflusst. Dadurch wiederum lässt sich eine funktionelle Trennung zwischen dem ersten Regelkreis und einem zweiten Regelkreis erreichen. Die beiden Regelungen unterstützen sich dann gegenseitig.

Insbesondere umfasst eine Einspritzeinrichtung ein Ventil zur Regelung der Einspritzmenge an flüssigem Wärmeträgermedium. Dadurch lässt sich über die Einspritzmenge der Zustandsgrößenwert und insbesondere die Temperatur des Wärmeträgermediums an einem Austritt aus dem entsprechenden Erhitzungsstrang regeln.

Es ist ferner günstig, wenn die Einspritzeinrichtung einen Zustandsgrößensensor und insbesondere Temperatursensor aufweist, um die entsprechende Austrittstemperatur zu ermitteln.

Insbesondere ist der Zustandsgrößensensor einem Ausgang einer Solarkollektoreinrichtung nachgeschaltet, um die entsprechende Zustandsgröße zu ermitteln. Günstigerweise ist dabei die Solarkollektoreinrichtung eine letzte Solarkollektoreinrichtung des Erhitzungsstrangs.

Es kann vorgesehen sein, dass ein oder mehrere Erhitzungsstränge mindestens eine Blende aufweisen. Die (mindestens eine) Blende ist fest oder ist fest einstellbar. Es lässt sich dadurch ein Arbeitspunkt festlegen. Unterschiedlichen Erhitzungssträngen können dabei unterschiedlich eingestellte Blenden zugeordnet sein.

Bei einem Ausführungsbeispiel weist ein Erhitzungsstrang eine Mehrzahl von Solarkollektoreinrichtungen und insbesondere eine Mehrzahl von Brennlinienkollektoren auf. Es ist auch möglich, dass ein Erhitzungsstrang beispielsweise an einem Turmreceiver realisiert ist, wobei Solarstrahlung von einem oder mehreren Heliostaten auf den Erhitzungsstrang gebündelt wird.

Der Erhitzungsabschnitt kann dabei ganz oder teilweise an einer Turmreceivereinrichtung angeordnet sein. Er kann beispielsweise durch ein Segment einer Turmreceivereinrichtung realisiert sein oder durch einen Receiverabschnitt einer Turmreceivereinrichtung.

Es ist möglich, dass eine erfindungsgemäße solarthermische Prozesswärmeanlage als Kraftwerk ausgebildet ist.

Dieses umfasst dann insbesondere eine Generatoreinrichtung zur Erzeugung elektrischer Energie.

Es ist beispielsweise auch möglich, dass eine erfindungsgemäße solarthermische Prozesswärmeanlage als Dampferzeugeranlage ausgebildet ist, welche insbesondere überhitzten Dampf bereitstellt.

Die nachfolgende Beschreibung bevorzugter Ausführungsformen dient im Zusammenhang mit der Zeichnung der näheren Erläuterung der Erfindung. Es zeigen:
- Figur 1: eine schematische Darstellung eines Ausführungsbeispiels eines erfindungsgemäßen solarthermischen Kraftwerks;
- Figur 2: eine Detaildarstellung eines Erhitzungsabschnitts (Überhitzungsabschnitts) des solarthermischen Kraftwerks gemäß Figur 1;
- Figur 3: ein Diagramm der Temperaturabhängigkeit einer Mischtemperatur vor Eintritt in eine Generatoreinrichtung in Abhängigkeit der Zeit, welche durch Simulation eines Ausführungsbeispiels eines erfindungsgemäßen Kraftwerks erhalten wurde, wobei ein Temperatur-Mittelwert gezeigt ist und der Temperaturverlauf in unterschiedlich bestrahlten Erhitzungssträngen; und
- Figur 4: ein ähnliches Diagramm wie in Figur 3, wenn das erfindungsgemäße Verfahren nicht eingesetzt wird.

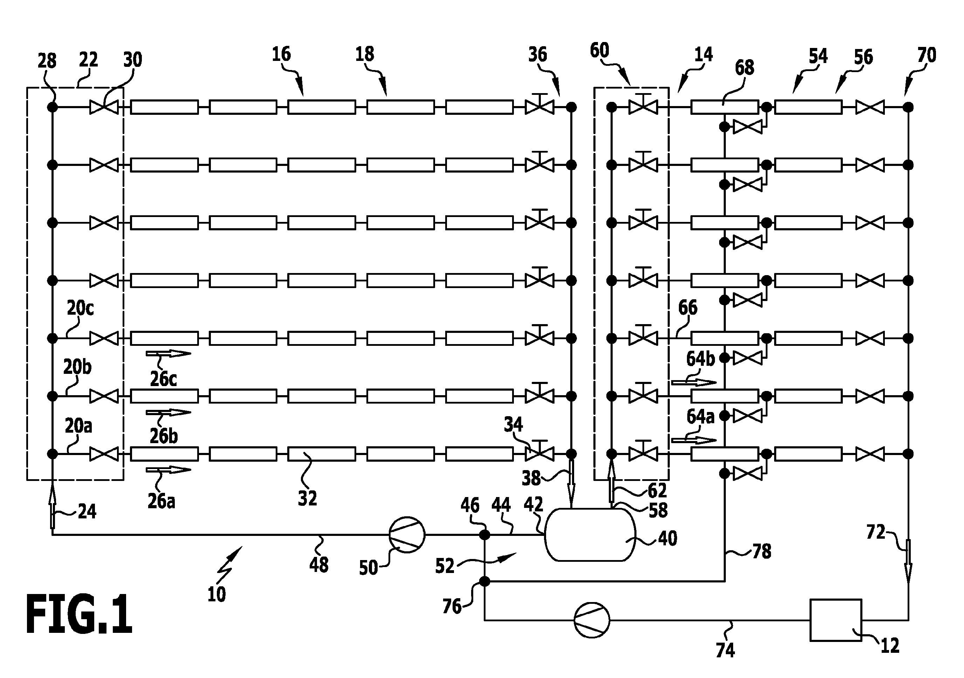

Ein Ausführungsbeispiel eines erfindungsgemäßen solarthermischen Kraftwerks als Beispiel einer solarthermischen Prozesswärmeanlage, welches in Figur 1 schematisch gezeigt und dort mit 10 bezeichnet ist, umfasst eine Generatoreinrichtung 12 zur Erzeugung von elektrischem Strom. Die Generatoreinrichtung 12 selber umfasst eine oder mehrere Dampfturbinen, an welchen thermische Energie durch Entspannung eines dampfförmigen Wärmeträgermediums in mechanische Energie umgewandelt wird, und einen oder mehrere Stromgeneratoren, an denen mechanische Energie in elektrische Energie umgewandelt wird. Das dampfförmige Wärmeträgermedium wird der Generatoreinrichtung 12 über ein Solarfeld 14 bereitgestellt.

Das Solarfeld 14 umfasst einen ersten Erhitzungsabschnitt 16, welcher ein Verdampferabschnitt 18 ist. In dem ersten Erhitzungsabschnitt 16 wird flüssiges Wärmeträgermedium, wie beispielsweise Wasser, verdampft.

Der erste Erhitzungsabschnitt 16 umfasst eine Mehrzahl von Verdampfersträngen 20a, 20b, 20c usw. Diese Verdampferstränge 20a, 20b, 20c usw. sind parallel geschaltet. Sie sind so parallel angeordnet, dass sie von Teilströmen eines Gesamtstroms parallel durchströmt werden. Diese parallele Schaltung bedeutet nicht unbedingt, dass die Verdampferstränge 20a, 20b, 20c usw. geometrisch parallel angeordnet sind.

Der Verdampferabschnitt 18 weist eine Verteilungseinrichtung 22 auf, durch welche aus einem Gesamtstrom 24 an flüssigem Wärmeträgermedium Teilströme 26a, 26b, 26c usw. erzeugbar sind, die die jeweiligen Verdampferstränge 20a, 20b, 20c usw. durchströmen.

Die Verteilungseinrichtung 22 weist beispielsweise Abzweigungen 28 auf, deren Anzahl der Anzahl der Verdampferstränge 20a, 20b, 20c usw. entspricht. Ferner weist die Verteilungseinrichtung 22 beispielsweise steuerbare Ventile 30 auf, deren Anzahl der Anzahl der Verdampferstränge entspricht. Insbesondere ist ein jeweiliges Ventil 30 einer zugeordneten Abzweigung nachgeordnet.

Die Verdampferstränge 20a, 20b, 20c usw. umfassen jeweils eine Mehrzahl von in Serie angeordneten Solarkollektoreinrichtungen 32. Diese Solarkollektoreinrichtungen 32 werden von flüssigem Wärmeträgermedium durchströmt. Es erfolgt dabei eine Aufheizung durch Solarstrahlung.

Die Solarkollektoreinrichtungen 32 sind insbesondere als Brennlinienkollektoren ausgebildet, welche einen linienhaften Fokusbereich aufweisen, das heißt einen Fokusbereich, welcher eine Erstreckung in einer Längsrichtung aufweist, die erheblich größer ist als die Erstreckung in einer Querrichtung senkrecht dazu. Beispiele für Brennlinienkollektoren sind Parabolrinnenkollektoren und lineare Fresnelkollektoren.

Die Verdampferstränge 20a, 20b, 20c usw. weisen beispielsweise jeweils ein Absperrventil 34 auf.

Der Verdampferabschnitt 18 weist eine Sammeleinrichtung 36 auf, über welche die Teilströme 26a, 26b, 26c usw. zu einem Gesamtstrom 38 gesammelt werden. Der Gesamtstrom 38 ist ein Dampfstrom, welcher Flüssigkeitsanteile enthalten kann.

Ein Ausgang der Sammeleinrichtung 36 mündet in einen Flüssigkeits-Dampf-Abscheider 40, durch welchen Flüssigkeit und Dampf trennbar ist.

Ein Flüssigkeitsausgang 42 des Flüssigkeits-Dampf-Abscheiders 40 ist über eine Leitung 44 und einen Sammler 46 mit der Verteilungseinrichtung 22 verbunden, wobei zwischen dem Sammler 46 und der Verteilungseinrichtung 22 eine Leitung 48 liegt. An der Leitung 48 ist eine Pumpe 50 angeordnet. Der Flüssigkeits-Dampf-Abscheider 40 ist ein Abscheider einer Rezirkulationseinrichtung 52, über welche Flüssigkeit aus dem Verdampferabschnitt 18 rückführbar ist. Durch die Rezirkulation von Flüssigkeit lassen sich gleichmäßige Verdampfungsverhältnisse erhalten.

Der Flüssigkeits-Dampf-Abscheider 40 ist ein zentraler Abscheider, welcher einer Mehrzahl von Verdampfersträngen des Verdampferabschnitts 18 zugeordnet ist und insbesondere allen Verdampfersträngen des Verdampferabschnitts 18 zugeordnet ist.

In dem Verdampferabschnitt 18 nimmt das Wärmeträgermedium latente Wärme auf.

Auf den ersten Erhitzungsabschnitt 16 folgt ein zweiter Erhitzungsabschnitt 54, welcher ein Überhitzungsabschnitt 56 ist. In dem Überhitzungsabschnitt 56 nimmt das dampfförmige Wärmeträgermedium sensible Wärme auf, wobei die Wärmequelle Solarstrahlung ist.

Ein Dampfausgang 58 des Flüssigkeits-Dampf-Abscheiders 40 mündet in eine als Ganzes mit 60 bezeichnete Verteilungseinrichtung, durch welche ein Gesamtstrom 62 an dampfförmigem Wärmeträgermedium in Teilströme 64a, 64b usw. aufteilbar ist.

Der zweite Erhitzungsabschnitt 54 umfasst eine Mehrzahl von parallel geschalteten Erhitzungsabschnitten 66, welche in dem Ausführungsbeispiel Überhitzungsabschnitte sind.

Durch die Verteilungseinrichtung 60 erfolgt eine parallele Aufteilung des Gesamtstroms 62 in Teilströme 64a, 64b usw. auf die jeweiligen Erhitzungsstränge 66. Die parallele Schaltung der Erhitzungsstränge 66 bedeutet nicht unbedingt, dass diese auch geometrisch parallel angeordnet sind.

Die Erhitzungsstränge 66 umfassen jeweils eine Mehrzahl von Solarkollektoreinrichtung 68. Diese sind beispielsweise Brennlinienkollektoren wie oben beschrieben.

Der zweite Erhitzungsabschnitt 54 weist eine Sammeleinrichtung 70 auf, durch welche die Teilströme 64a, 64b usw. sammelbar sind und ein Gesamtstrom 72 an überhitztem dampfförmigen Wärmeträgermedium erzeugbar ist. Dieser Gesamtstrom 72 wird mit einer Mischtemperatur der Generatoreinrichtung 12 zugeführt.

Von der Generatoreinrichtung führt eine Leitung 74 zu einer Abzweigung 76. Durch die Leitung 74 wird flüssiges Wärmeträgermedium transportiert, welches aus der Entspannung von dampfförmigem Wärmeträgermedium an einer oder mehreren Turbinen entstanden ist. Ein Ausgang der Abzweigung 76 ist mit einem Eingang des Sammlers 46 verbunden, so dass flüssiges Wärmeträgermedium über die Leitung 48 der Verteilungseinrichtung 22 zuführbar ist.

Von einem weiteren Ausgang der Abzweigung 76 führt eine Leitung 78 zu dem zweiten Erhitzungsabschnitt 54. Über diese Leitung 78 ist dem zweiten Erhitzungsabschnitt 54 flüssiges Wärmeträgermedium bereitstellbar, welches in Erhitzungsstränge 66 insbesondere zur Kühlung einspritzbar ist. Dies wird untenstehend noch näher erläutert.

Das solarthermische Kraftwerk umfasst eine dem zweiten Erhitzungsabschnitt 54 zugeordnete Regelungseinrichtung 80, über welche die Massenströme in den Erhitzungssträngen 66 angepasst an die tatsächlichen Verhältnisse regelbar sind.

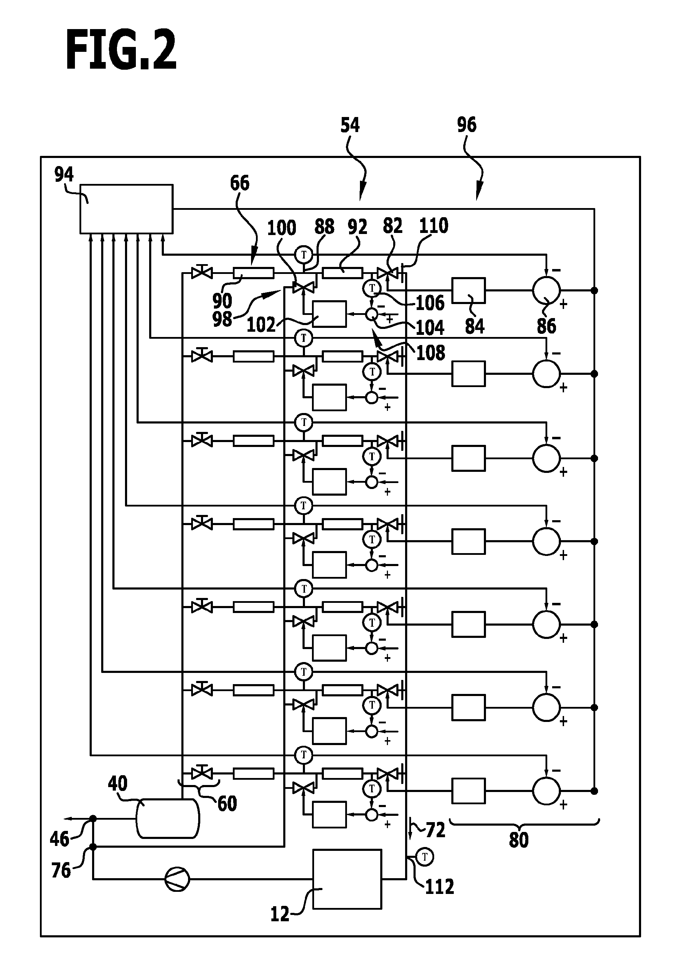

Die Erhitzungsstränge 66 weisen jeweils ein Massenstrom-Regelventil 82 auf, welche jeweils über die Regelungseinrichtung 80 angesteuert werden. Durch die Ventileinstellung der Massenstrom-Regelventile 82 wird der Massenstrom in den jeweiligen Erhitzungssträngen 66 eingestellt. Eine entsprechende Ansteuerungseinrichtung 84, welche Teil der Regelungseinrichtung 80 ist, ist in Figur 2 mit dem Bezugszeichen 84 symbolisiert.

Die Regelungseinrichtung 80 weist jeweilige, den individuellen Erhitzungssträngen 66 zugeordnete Regler 86 auf. Bei diesen handelt es sich insbesondere um PI-Regler. Diese bestimmen das Ansteuerungssignal, über welches mittels der Ansteuerungseinrichtung 84 das jeweilige Massenstrom-Regelventil 82 angesteuert wird und welche Ventileinstellung und insbesondere welcher Ventilhub an den jeweiligen Massenstrom-Regelventilen 82 eingestellt wird.

An den jeweiligen Erhitzungssträngen 66 ist (mindestens) ein Temperatursensor 88 angeordnet, welcher die Temperatur des in dem entsprechenden Erhitzungsstrang 66 strömenden Wärmeträgermediums ermittelt. Es ist vorzugsweise vorgesehen, dass die Temperatursensoren 88 unterschiedlicher Erhitzungsstränge 66 an einander entsprechenden Stellen angeordnet sind, so dass an unterschiedlichen Erhitzungssträngen 66 einander entsprechende Temperaturen gemessen werden.

Die Temperatursensoren 88 sind Zustandsgrößensensoren, welche die Zustandsgröße Temperatur des Wärmeträgermediums messen. Es ist dabei grundsätzlich möglich, dass auch eine andere Zustandsgröße für die Regelung verwendet wird. Beispielsweise ist es möglich, dass, wenn das Wärmeträgermedium ein Mehrphasengemisch ist, der Dampfgehalt als Zustandsgröße, auf welcher die Regelung basiert, verwendet wird. Im Folgenden wird das Regelungsverfahren basierend auf der Zustandsgröße Temperatur beschrieben.

Es ist bevorzugt, dass die jeweiligen Temperatursensoren 88 an oder in der Nähe eines Endes der jeweiligen Erhitzungsstränge 66 angeordnet sind. Dadurch wird sichergestellt, dass nur die Temperatur an dampfförmigem Wärmeträgermedium gemessen wird.

In Figur 2 ist ein Ausführungsbeispiel gezeigt, bei dem eine zusätzliche Einspritzung von flüssigem Wärmeträgermedium an die jeweiligen Erhitzungsstränge 66 vorgesehen ist. In diesem Falle sind die entsprechenden Temperatursensoren 88 zwischen einer vorletzten Solarkollektoreinrichtung 90 und einer letzten Solarkollektoreinrichtung 92 in dem jeweiligen Erhitzungsstrang 66 positioniert.

Die Temperatursensoren 88 der Erhitzungsstränge 66 sind mit einer Mittelwertbildungseinrichtung 94 verbunden, an welche sie ihre Messsignale liefern. Die Mittelwertbildungseinrichtung 94 enthält alle gemessenen Temperaturwerte der Temperatursensoren 88 der Erhitzungsstränge 66. Die Mittelwertbildungseinrichtung 94 kann Teil der Regelungseinrichtung 80 sein oder von dieser getrennt sein.

Die Mittelwertbildungseinrichtung 94 berechnet einen Mittelwert über die Erhitzungsstränge 66 der durch die jeweiligen Temperatursensoren 88 an den Erhitzungssträngen 66 gemessenen Temperaturen des dampfförmigen Wärmeträgermediums. Die Mittelwertbildung kann dabei über alle Erhitzungsstränge 66 des zweiten Erhitzungsabschnitts 54 oder zumindest über eine Mehrheit der Erhitzungsstränge 66 erfolgen.

Die Art der Mittelwertbildung kann abhängig von den speziellen Gegebenheiten sein. Beispielsweise wird ein arithmetischer Mittelwert der gemessenen Temperaturen ermittelt oder ein geometrischer Mittelwert. Es kann auch eine unterschiedliche Gewichtung von gemessenen Temperaturen von unterschiedlichen Erhitzungssträngen 66 bei der Mittelwertbildung vorgesehen sein. Beispielsweise kann ein zentraler Erhitzungsstrang anders gewichtet werden als ein außenliegender Erhitzungsstrang.

Die Mittelwertbildungseinrichtung 94 ist mit den Reglern 86 verbunden; sie stellt diesen den berechneten Mittelwert bereit.

Die Temperatursensoren 88 sind ebenfalls mit den entsprechenden Reglern 86 verbunden und stellen diesen den gemessenen Temperaturwert bereit.

Die jeweiligen Massenstrom-Regelventile 82 werden entsprechend einer Differenz zwischen dem berechneten Mittelwert und dem gemessenen Temperaturwert angesteuert. Ergibt sich beispielsweise, dass die gemessene Temperatur unterhalb des Mittelwerts liegt, dann wird das entsprechende Massenstrom-Regelventil 82 weiter geöffnet. Ergibt sich, dass der gemessene Temperaturwert oberhalb des Mittelwerts liegt, dann wird der Ventilhub des entsprechenden Massenstrom-Regelventils 82 verkleinert.

Über die Regelungseinrichtung 80 ist ein erster Regelkreis 96 gebildet, über welchen der Massenstrom in den jeweiligen Erhitzungssträngen 66 mittels der Massenstrom-Regelventile 82 regelbar ist, ohne dass der jeweilige Massenstrom selber gemessen werden muss.

Den Erhitzungssträngen 66 ist jeweils (mindestens) eine Einspritzeinrichtung 98 mit einer oder mehreren Einspritzstellen zugeordnet, durch welches flüssiges Wärmeträgermedium insbesondere zur Kühlung einspritzbar ist. Die jeweilige Einspritzeinrichtung 98 ist dabei insbesondere an der letzten Solarkollektoreinrichtung 92 angeordnet. Vor einem Eingang dieser letzten Solarkollektoreinrichtung 92 lässt sich flüssiges Wärmeträgermedium einspritzen, um die Austrittstemperatur des dampfförmigen Wärmeträgermediums an dem jeweiligen Erhitzungsstrang 66 zu beeinflussen und insbesondere regeln zu können.

Die Einspritzeinrichtungen 98 sind dabei mit der Leitung 78 verbunden, welche flüssiges Wärmeträgermedium bereitstellt.

Die Einspritzeinrichtungen 98 umfassen jeweils ein Ventil 100, welches steuerbar und/oder regelbar ist. Über dieses Ventil lässt sich die eingespritzte Flüssigkeitsmenge einstellen. Die jeweiligen Ventile werden dabei durch jeweils zugeordnete Ansteuerungseinrichtungen 102 angesteuert. Diesen wiederum sind jeweils Regler 104 zugeordnet, welche die Ansteuerungssignale bestimmen.

Die jeweiligen Einspritzeinrichtungen 98 umfassen einen Temperatursensor 106, welcher die Temperatur des (dampfförmigen) Wärmeträgermediums an einem Ausgang der letzten Solarkollektoreinrichtung 92 misst. Das entsprechende Temperatursignal wird dem Regler 104 bereitgestellt. Abhängig von der Abweichung zu einer Solltemperatur wird das entsprechende Ventil 100 angesteuert, um durch Vergrößerung oder Verringerung der eingespritzten Flüssigkeitsmenge eine Temperaturerniedrigung oder Temperaturerhöhung zu erzielen.

Mittels der Einspritzvorrichtungen 98 sind zweite Regelkreise 108 gebildet, über welche sich die Temperatur des dampfförmigen Wärmeträgermediums beim Austritt aus dem entsprechenden Erhitzungsstrang 66 beeinflussen lässt.

Es ist vorzugsweise vorgesehen, dass die jeweiligen Massenstrom-Regelventile 82 nach der letzten Solarkollektoreinrichtung 92 an den jeweiligen Erhitzungssträngen 66 angeordnet sind.

Es ist möglich, dass Erhitzungsstränge jeweils eine Blende 110 aufweisen. Über diese Blende 110 lässt sich insbesondere ein Höchstmassenstrom einstellen. Die Blende 110 kann dabei fest sein oder einstellbar sein. Über die Blenden 110 lässt sich eine Art von Arbeitspunkt für den Massenstrom für die jeweiligen Erhitzungsstränge 66 festlegen. Die Festlegung kann dabei durch entsprechende Wahl bzw. Einstellung der individuellen Blenden 110 individuell für die jeweiligen Erhitzungsstränge 66 erfolgen.

Das solarthermische Kraftwerk 10 funktioniert wie folgt:

Den Verdampfersträngen 20a, 20b, 20c des ersten Erhitzungsabschnitts 16 wird flüssiges Wärmeträgermedium bereitgestellt. Durch solare Erhitzung verdampft das Wärmeträgermedium mindestens teilweise. Durch den (zentralen) Flüssigkeits-Dampf-Abscheider 40 erfolgt eine Trennung von Flüssigkeit und Dampf. Die (heiße) abgeschiedene Flüssigkeit wird rezirkuliert. Der Dampf wird dem zweiten Erhitzungsabschnitt 54 zur Überhitzung, das heißt zur Aufnehmung von sensibler Wärme, zugeführt.

Das Druckniveau in den jeweiligen Erhitzungssträngen 66 und insbesondere der Druckabfall an den Massenstrom-Regelventilen 82 und die Massenströme an den unterschiedlichen Erhitzungssträngen 66 sind a priori nicht bekannt, da der Massenstrom des Gesamtstroms 62 nicht a priori bekannt ist. Die Druckverluste in den Erhitzungssträngen 66 hängen von der Heizungssituation und den jeweiligen Massenströmen ab. Die Beheizungssituation kann aufgrund unterschiedlicher Einstrahlungsbedingungen an den jeweiligen Erhitzungssträngen 66 unterschiedlich sein. Unterschiedliche Leitungslängen können zu unterschiedlichen Druckverlusten führen.

Bei der erfindungsgemäßen Lösung erfolgt eine Massenstromregelung durch die Regelungseinrichtung 80, ohne dass der Massenstrom selber gemessen werden muss. Die Stellgröße ist die jeweilige Ventileinstellung der Massenstrom-Regelventile 82, wobei die Regelgröße die Temperatur ist, welche durch die Temperatursensoren 88 messbar ist. Die Sollgröße für diese Regelgrößen ist dabei der Mittelwert der entsprechenden Temperaturen über die Gesamtheit der Erhitzungsstränge 66 (oder zumindest über eine Mehrheit der Erhitzungsstränge 66) genommen.

Es werden durch die Temperatursensoren 88 die entsprechenden Temperaturen zeitlich kontinuierlich gemessen und der Mittelwertbildungseinrichtung 94 bereitgestellt, welche einen entsprechenden Mittelwert zeitlich kontinuierlich berechnet. Dieser Mittelwert ist dem zweiten Erhitzungsabschnitt 54 zugeordnet. Die jeweiligen Regler ermitteln aus der Differenz der gemessenen Temperatur zu dem Mittelwert ein Ansteuerungssignal, durch welches dann die jeweiligen Massenstrom-Regelventile 82 individuell zeitlich kontinuierlich angesteuert werden.

Die Massenstrom-Regelventile 82 passen den Massenstrom in den Erhitzungssträngen 66 so an, dass eine möglichst gleiche Temperatur (nämlich die mittlere Temperatur) und insbesondere Austrittstemperatur erreicht wird. Die absolute Höhe dieser Temperatur geht dabei nicht als direkte Information in den ersten Regelkreis 96 ein. Es muss auch kein absoluter Sollwert für diese Austrittstemperatur vorgegeben werden. Dadurch lassen sich unterschiedliche Energieeinträge in den zweiten Erhitzungsabschnitt 54 und unterschiedliche Eingangsmassenströme aus dem Flüssigkeits-Dampf-Abscheider 44 und insbesondere deren zeitliche Variation berücksichtigen.

Es kann zusätzlich vorgesehen sein, dass die Austrittstemperatur der jeweiligen Erhitzungsstränge 66 über die zugeordneten Einspritzeinrichtungen 98 geregelt wird. Die entsprechenden zweiten Regelkreise 108 lassen sich weitgehend unabhängig von dem ersten Regelkreis 96 betreiben. In diesem Falle ist die Regelgröße, welche in der Regelungseinrichtung 80 eingestellt wird, die Austrittstemperatur der vorletzten Solarkollektoreinrichtung 90 der jeweiligen Erhitzungsstränge 66.

Durch die erfindungsgemäße Lösung lässt sich insbesondere bei der Verwendung eines zentralen Flüssigkeits-Dampf-Abscheiders 40 eine Vergleichmäßigung der Austrittstemperaturen aus dem zweiten Erhitzungsabschnitt 54 erreichen.

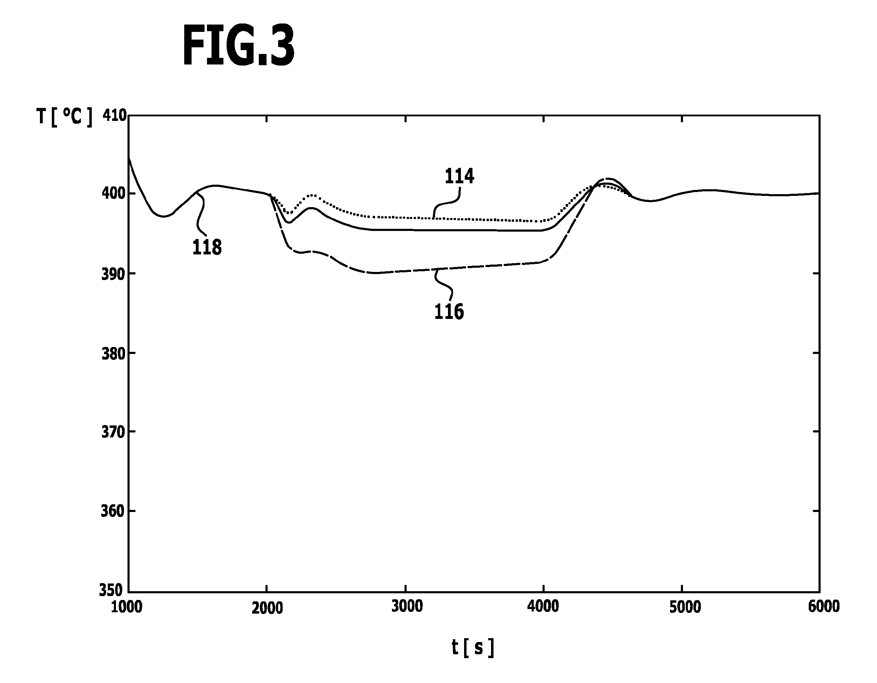

In Figur 3 ist ein Diagramm der zeitlichen Abhängigkeit einer Austrittstemperatur bei dem erfindungsgemäßen Verfahren gezeigt. Die Austrittstemperatur ist die Mischtemperatur gemäß Position 112 in Figur 2. Das Diagramm der Figur 3 beruht auf einer Simulation des erfindungsgemäßen Verfahrens, wenn der zweite Erhitzungsabschnitt 54 sieben Erhitzungsstränge 66 umfasst, von denen drei Erhitzungsstränge für einen bestimmten Zeitraum (ab t = 2000 s) zur Hälfte abgeschattet werden.

Die Erhitzungsstränge weisen je zwei Solarkollektoren auf, welche jeweils 100 m lang sind. Der Austrittsdruck ist 110 bar, welcher als konstant angenommen ist. Bei einer Beheizung von 900 W/m² wird von einem Dampfmassenstrom von 8,4 kg/s ausgegangen, der auf der Taulinie in das System eintritt. Wenn keine Einspritzung erfolgt, liegt die Mischtemperatur bei 430°C. Eine Austrittstemperatur von 400°C erfordert (im stationären Zustand) die Einspritzung von 0,067 kg/s Wasser bei einer Temperatur von 275°C. Die Kurve 114 zeigt den Verlauf für die bestrahlten Erhitzungsstränge. Die Kurve 116 zeigt den Verlauf für die abgeschatteten Erhitzungsstränge. Die Kurve 118 zeigt den Verlauf der resultierenden Mischtemperatur.

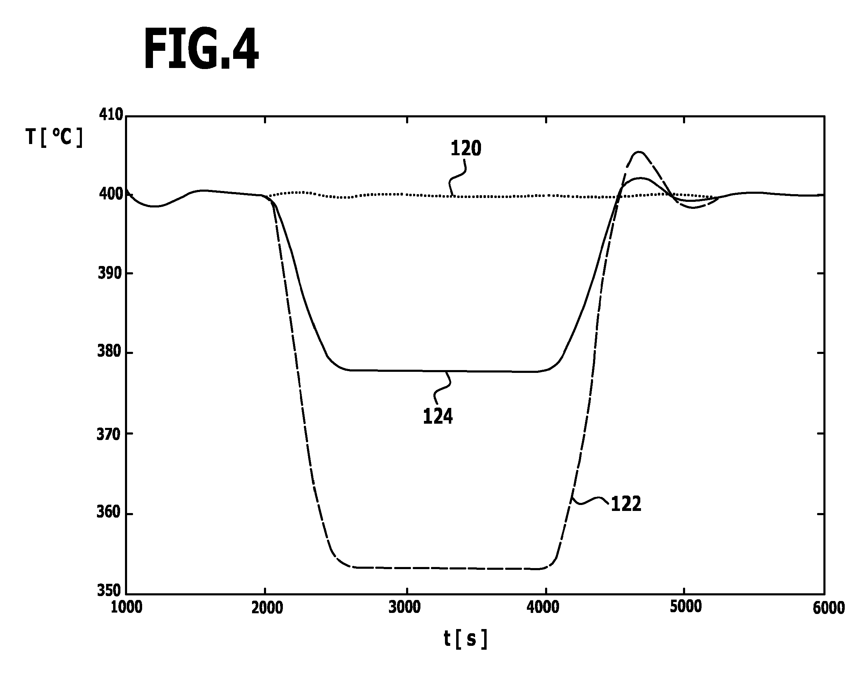

In Figur 4 ist das Ergebnis einer ähnlichen Simulation gezeigt, wobei der erste Regelkreis 96 nicht vorhanden ist und eine Regelung nur über Einspritzkühlung erfolgt. Die Kurve 120 gehört zu den bestrahlten Erhitzungssträngen und die Kurve 122 zu den unbestrahlten Erhitzungssträngen. Die Mischtemperatur hat den Verlauf 124.

Aus dem Vergleich von Figur 3 und 4 ist ersichtlich, dass die Temperatur des dampfförmigen Wärmeträgermediums, welches der Generatoreinrichtung 12 zugeführt wird, zeitlich geringere Schwankungen aufweist, wenn das erfindungsgemäße Regelungskonzept realisiert ist. Auch bei stark unterschiedlichen Einstrahlungsbedingungen lässt sich die Schwankungsbreite gering halten. Durch die erfindungsgemäße Lösung lässt sich ein Gesamtmassenstrom auf unterschiedliche Erhitzungsstränge aufteilen, wobei der Massenstrom in den individuellen Erhitzungssträngen regelbar ist und der zusammengeführte Gesamtmassenstrom 92, welcher einer Generatoreinrichtung 12 zugeführt wird, eine geringe Schwankungsbreite aufweist.

Eine Messung der einzelnen Massenströme ist für das erfindungsgemäße Regelungsverfahren nicht erforderlich. Diese werden über die Massenstrom-Regelventile 92 ohne Messung beeinflusst.

Durch die erfindungsgemäße Lösung erhält man auch bei starken Transienten in den Einstrahlungsbedingungen und im Gesamtmassenstrom ein stabilisierendes Verhalten, selbst wenn der Eingangsmassenstrom und die Einstrahlungsstärke unbekannt sind. Die Sensitivität gegenüber Parametervariationen und insbesondere bei der Verwendung von PI-Reglern ist gering.

Wenn zusätzlich zweite Regelkreise 108 mit Einspritzkühlung vorgesehen werden, dann wirkt der erste Regelkreis 96 unterstützend, um möglichst gleichmäßige Temperaturverhältnisse an den Ausgängen der jeweiligen Erhitzungsstränge 66 zu erhalten.

Bei der erfindungsgemäßen Lösung wird zur Regelung der Massenströme ein berechneter Mittelwert verwendet. Dadurch wirken die Massenstrom-Regelventile 82 zielführend zusammen. Wenn beispielsweise ein einzelner Erhitzungsstrang 66 abgeschattet wird, dann tritt dort eine hohe Abweichung nach unten von dem Temperaturmittelwert auf. Dies führt zu einer starken Drosselung des Massenstroms in diesem speziellen Erhitzungsstrang 66. Bei den anderen Erhitzungssträngen 66 tritt eine leichte Erhöhung des Massenstroms durch weitere Öffnung der jeweiligen Massenstrom-Regelventile 82 auf, da dort eine Abweichung von dem Temperaturmittelwert nach oben vorliegt. Man erhält dadurch eine "gegenseitige Unterstützung" der Erhitzungsstränge 66 bei asymmetrischen Störungen der Einstrahlungsbedingungen.

Es kann beispielsweise vorgesehen sein, dass die Massenstrom-Regelventile 82 in einer bestimmten Ausgangsposition gestartet werden, um eine Veränderung der Massenstromverteilung zu bewirken, die gegenläufig ist. Die Ausgangsposition ist insbesondere ein Teilhub eines Gesamthubs. Beispielsweise beträgt dieser Teilhub 60 % des Gesamthubs. Simulationsrechnungen haben ergeben, dass nach der Ausregelung von asymmetrischen Einstrahlungsbedingungen eine Rückkehr des Ventilhubs in die Ausgangsposition erfolgt. Eine verbleibende Abweichung sollte über einen schwach parametrierten integral wirkenden Regler mit der Ventileinstellung als Regelgröße kompensiert werden, um ein langfristiges Verbleiben der Massenstrom-Regelventile 82 im Regelbereich sicherzustellen.

Es ist insbesondere vorgesehen, dass die Regelung an den Erhitzungssträngen mit langsamen Rückführungsreglern durchgeführt wird, die dafür sorgen, dass die Rückführung in Richtung eines vorgegebenen Werts erfolgt, wenn eine stationäre Einregelung erfolgt. Dieser vorgegebene Wert ist beispielsweise eine mittlere Einstellung des entsprechenden Massenstrom-Regelventils.

Das erfindungsgemäße Konzept kann für solarthermische Kraftwerke mit einem Verdampferabschnitt und einem Überhitzungsabschnitt eingesetzt werden.

Es ist beispielsweise auch möglich, dass das erfindungsgemäße Konzept an einem solarthermischen Kraftwerk realisiert wird, bei welchem ein Gas (wie beispielsweise Luft oder Helium) erhitzt wird. Beispielsweise können an einem Turmreceiver eine Mehrzahl von parallel geschalteten Erhitzungssträngen vorgesehen sein, welche von gasförmigem Wärmeträgermedium durchströmt werden. Auch hier können unterschiedliche Eingangsmassenströme und an unterschiedlichen Erhitzungssträngen unterschiedliche Einstrahlungsbedingungen vorliegen. Die individuelle Massenstromregelung an den individuellen Erhitzungssträngen auf Basis eines berechneten Mittelwerts und Ansteuerung von Massenstrom-Regelventilen in Abhängigkeit von der Differenz von den gemessenen Temperaturen zu dem Mittelwert lässt sich auch hier durchführen.

## Patentansprüche

1. Verfahren zum Betreiben einer solarthermischen Prozesswärmeanlage, bei dem ein Wärmeträgermedium in einem Erhitzungsabschnitt durch Solarstrahlung unter Aufnahme von Wärme erhitzt wird, wobei der Erhitzungsabschnitt eine Mehrzahl von Erhitzungssträngen aufweist, auf die das Wärmeträgermedium verteilt wird,
**dadurch gekennzeichnet, dass** an Erhitzungssträngen jeweils eine Zustandsgröße des Wärmeträgermediums gemessen wird, dass ein Mittelwert von gemessenen Zustandsgrößen über Erhitzungsstränge berechnet wird, und dass Massenstrom-Regelventile in den jeweiligen Erhitzungssträngen in Abhängigkeit von der jeweiligen Abweichung zwischen der gemessenen Zustandsgröße des strömenden Wärmeträgermediums in dem jeweiligen Erhitzungsstrang und dem berechneten Mittelwert angesteuert werden.

2. Verfahren nach Anspruch 1, **dadurch gekennzeichnet, dass** pro Erhitzungsstrang genau ein Massenstrom-Regelventil vorgesehen wird.

3. Verfahren nach Anspruch 1 oder 2, **dadurch gekennzeichnet, dass** das Wärmeträgermedium beim Durchströmen des Erhitzungsabschnitts gasförmig oder dampfförmig oder flüssig oder ein Mehrphasengemisch ist.

4. Verfahren nach einem der vorangehenden Ansprüche, **dadurch gekennzeichnet, dass** Wärmeträgermedium aus einem Grundstrom in parallele Teilströme aufgeteilt wird, wobei die jeweiligen Teilströme jeweilige Erhitzungssträngen durchströmen.

5. Verfahren nach einem der vorangehenden Ansprüche, **gekennzeichnet durch** einen dem Erhitzungsabschnitt zugeordneten Regelkreis, bei dem Stellgrößen Ventileinstellungen der Massenstrom-Regelventile sind und Regelgrößen die jeweiligen Zustandsgrößen des Wärmeträgermediums in den jeweiligen Erhitzungssträngen sind.

6. Verfahren nach Anspruch 5, **dadurch gekennzeichnet, dass** eine Sollgröße für die Regelgrößen der Mittelwert der Zustandsgrößen ist.

7. Verfahren nach Anspruch 5 oder 6, **dadurch gekennzeichnet, dass** der Regelkreis den jeweiligen Erhitzungssträngen zugeordnete PI-Regler umfasst, durch welche die Massenstrom-Regelventile angesteuert werden.

8. Verfahren nach einem der vorangehenden Ansprüche, **dadurch gekennzeichnet, dass** die Zustandsgrößen an unterschiedlichen Erhitzungssträngen an einander entsprechenden Stellen der Erhitzungsstränge gemessen werden.

9. Verfahren nach einem der vorangehenden Ansprüche, **dadurch gekennzeichnet, dass** an dem jeweiligen Erhitzungsstrang die Zustandsgröße des strömenden Wärmeträgermediums an oder in der Nähe eines Austritts einer Solarkollektoreinrichtung gemessen wird.

10. Verfahren nach einem der vorangehenden Ansprüche, **dadurch gekennzeichnet, dass** an dem jeweiligen Erhitzungsstrang die Zustandsgröße des strömenden Wärmeträgermediums nach einer vorletzten Solarkollektoreinrichtung gemessen wird.

11. Verfahren nach einem der vorangehenden Ansprüche, **dadurch gekennzeichnet, dass** an dem jeweiligen Erhitzungsstrang die Zustandsgröße des strömenden Wärmeträgermediums an oder in der Nähe eines Austrittsendes des Erhitzungsstrangs gemessen wird.

12. Verfahren nach einem der vorangehenden Ansprüche, **dadurch gekennzeichnet, dass** eine Massenstromregelung in den Erhitzungssträngen ohne Massenstrommessung durchgeführt wird.

13. Verfahren nach einem der vorangehenden Ansprüche, **dadurch gekennzeichnet, dass** die Massenstrom-Regelventile in einer Ausgangsposition gestartet werden, bei welcher die Ventileinstellung ein Teilhub eines möglichen Gesamthubs ist oder ein Gesamthub ist.

14. Verfahren nach einem der vorangehenden Ansprüche, **dadurch gekennzeichnet, dass** die Zustandsgröße die Temperatur des Wärmeträgermediums ist.

15. Verfahren nach einem der Ansprüche 1 bis 13, **dadurch gekennzeichnet, dass** die Zustandsgröße der Dampfgehalt im Wärmeträgermedium ist, wenn das Wärmeträgermedium mehrphasig ist.

16. Verfahren nach einem der vorangehenden Ansprüche, **dadurch gekennzeichnet, dass** an einem oder mehreren Erhitzungssträngen der Massenstrom durch mindestens eine Blende reduziert wird.

17. Verfahren nach Anspruch 16, **dadurch gekennzeichnet, dass** die jeweilige mindestens eine Blende an oder in der Nähe eines einphasig durchströmten Bereichs des zugeordneten Erhitzungsstrangs angeordnet wird.

18. Verfahren nach einem der vorangehenden Ansprüche, **dadurch gekennzeichnet, dass** an dem jeweiligen Erhitzungsstrang flüssiges Wärmeträgermedium eingespritzt wird.

19. Verfahren nach Anspruch 18, **dadurch gekennzeichnet, dass** durch die Einspritzung die Zustandsgröße und/oder eine Endtemperatur des Wärmeträgermediums beim Austritt aus dem Erhitzungsstrang geregelt wird.

20. Verfahren nach Anspruch 18 oder 19, **dadurch gekennzeichnet, dass** die Einspritzung vor einer letzten Solarkollektoreinrichtung des Erhitzungsstrangs durchgeführt wird.

21. Verfahren nach Anspruch 20, **dadurch gekennzeichnet, dass** die Einspritzung nach der Messung der Zustandsgröße, welche in die Mittelwertbildung eingeht, erfolgt.

22. Verfahren nach einem der Ansprüche 18 bis 21, **dadurch gekennzeichnet, dass** die Einspritzung über einen Regelkreis durchgeführt wird.

23. Verfahren nach Anspruch 22, **dadurch gekennzeichnet, dass** eine Regelgröße des Regelkreises die Zustandsgröße des Wärmeträgermediums ist und eine Stellgröße eine Einspritzmenge ist.

24. Verfahren nach einem der vorangehenden Ansprüche, **dadurch gekennzeichnet, dass** die Regelung so durchgeführt wird, dass ein Massenstrom-Regelventil bei stationären Bedingungen eine vorgegebene Einstellung aufweist.

25. Verfahren nach einem der vorangehenden Ansprüche, **dadurch gekennzeichnet, dass** der jeweilige Erhitzungsstrang eine oder mehrere Solarkollektoreinrichtungen umfasst.

26. Verfahren nach Anspruch 25, **dadurch gekennzeichnet, dass** die mindestens eine Solarkollektoreinrichtung als Brennlinienkollektor ausgebildet ist.

27. Verfahren nach einem der Ansprüche 1 bis 25, **dadurch gekennzeichnet, dass** die mindestens eine Solarkollektoreinrichtung eine Turmreceivereinrichtung oder ein Segment einer solchen ist.

28. Verfahren nach einem der vorangehenden Ansprüche, **dadurch gekennzeichnet, dass** der Erhitzungsabschnitt ein Überhitzungsabschnitt für dampfförmiges Wärmeträgermedium ist.

29. Verfahren nach einem der vorangehenden Ansprüche, **dadurch gekennzeichnet, dass** der Gesamtstrom an Wärmeträgermedium, welcher dem Erhitzungsabschnitt bereitgestellt wird, von einer zentralen Sammeleinrichtung bereitgestellt wird.

30. Solarthermische Prozesswärmeanlage, umfassend einen Erhitzungsabschnitt (54), in dem ein Wärmeträgermedium durch Solarstrahlung unter Aufnahme von Wärme erhitzbar ist, wobei der Erhitzungsabschnitt (54) eine Mehrzahl von parallel geschalteten Erhitzungssträngen (66) aufweist,
**dadurch gekennzeichnet , dass** an den Erhitzungssträngen (66) oder an einer Mehrheit von Erhitzungssträngen (66) jeweils ein Massenstrom-Regelventil (82) angeordnet ist, dass den Erhitzungssträngen (66) jeweils ein oder mehrere Zustandsgrößensensoren (88) zur Messung einer Zustandsgröße von strömendem Wärmeträgermedium zugeordnet sind, dass eine Regelungseinrichtung (80) vorgesehen ist, durch welche die Massenstrom-Regelventile (82) ansteuerbar sind, und dass eine Mittelwertbildungseinrichtung (94) vorgesehen ist, durch welche ein Mittelwert von gemessenen Zustandsgrößen über Erhitzungsstränge (66) berechenbar ist, wobei die Ansteuerung des Massenstrom-Regelventils (82) eines jeweiligen Erhitzungsstrangs (66) abhängig ist von der Zustandsgrößenabweichung zwischen der jeweils gemessenen Zustandsgröße des Wärmeträgermediums in dem jeweiligen Erhitzungsstrang (66) und dem berechneten Mittelwert über die Erhitzungsstränge (66).

31. Solarthermische Prozesswärmeanlage nach Anspruch 30, **dadurch gekennzeichnet, dass** Eingänge der Mittelwertbildungseinrichtung (94) mit Zustandsgrößensensoren (88) verbunden sind.

32. Solarthermische Prozesswärmeanlage nach Anspruch 30 oder 31, **dadurch gekennzeichnet, dass** Ausgänge der Mittelwertbildungseinrichtung (94) mit den Erhitzungssträngen (66) zugeordneten Reglern (86) verbunden sind.

33. Solarthermische Prozesswärmeanlage nach einem der Ansprüche 30 bis 32, **dadurch gekennzeichnet, dass** die Zustandsgrößensensoren Temperatursensoren (88) sind.

34. Solarthermische Prozesswärmeanlage nach einem der Ansprüche 30 bis 33, **dadurch gekennzeichnet, dass** die Zustandsgrößensensoren Dampfgehaltsensoren sind.

35. Solarthermische Prozesswärmeanlage nach einem der Ansprüche 30 bis 34, **gekennzeichnet durch** eine Verteilungseinrichtung (60) zur Aufteilung eines Gesamtstroms (62) in Teilströme (64a, 64b) zur Durchströmung der Erhitzungsstränge (66).

36. Solarthermische Prozesswärmeanlage nach Anspruch 35, **dadurch gekennzeichnet, dass** der Verteilungseinrichtung (60) ein oder mehrere Flüssigkeits-Dampf-Abscheider (40) vorgeschaltet sind.

37. Solarthermische Prozesswärmeanlage nach Anspruch 36, **dadurch gekennzeichnet, dass** ein Flüssigkeits-Dampf-Abscheider (40) ein zentraler Abscheider ist, welcher einer Mehrzahl von Verdampfersträngen (20a, 20b, 20c) zugeordnet ist.

38. Solarthermische Prozesswärmeanlage nach Anspruch 37, **dadurch gekennzeichnet, dass** der Flüssigkeits-Dampf-Abscheider (40) ein Abscheider einer Rezirkulationseinrichtung (52) der Verdampferstränge (20a, 20b, 20c) ist.

39. Solarthermische Prozesswärmeanlage nach einem der Ansprüche 30 bis 38, **dadurch gekennzeichnet, dass** die Zustandsgrößensensoren (88) unterschiedlicher Erhitzungsstränge (66) an einander entsprechenden Stellen angeordnet sind.

40. Solarthermische Prozesswärmeanlage nach einem der Ansprüche 30 bis 39, **dadurch gekennzeichnet, dass** ein Zustandsgrößensensor (88) eines Erhitzungsstrangs (66) nach einem Ausgang einer vorletzten Solarkollektoreinrichtung (90) angeordnet ist.

41. Solarthermische Prozesswärmeanlage nach Anspruch 40, **dadurch gekennzeichnet, dass** ein Zustandsgrößensensor (88) an einem Erhitzungsstrang (66) an oder in der Nähe eines Austrittsendes des Erhitzungsstrangs (66) angeordnet ist.

42. Solarthermische Prozesswärmeanlage nach einem der Ansprüche 30 bis 41, **gekennzeichnet durch** einen ersten Regelkreis (96), über welchen die Massenstrom-Regelventile (82) ansteuerbar sind.

43. Solarthermische Prozesswärmeanlage nach einem der Ansprüche 30 bis 42, **dadurch gekennzeichnet, dass** einem Erhitzungsstrang (66) mindestens eine Einspritzeinrichtung (98) mit einer oder mehreren Einspritzstellen für Wärmeträgermedium zugeordnet ist.

44. Solarthermische Prozesswärmeanlage nach Anspruch 43, **dadurch gekennzeichnet, dass** die mindestens eine Einspritzeinrichtung (98) mindestens einen Regler (104) umfasst, durch welchen ein zweiter Regelkreis (108) gebildet ist, durch den die Einspritzung von Wärmeträgermedium regelbar ist.

45. Solarthermische Prozesswärmeanlage nach Anspruch 43 oder 44, **dadurch gekennzeichnet, dass** eine Einspritzstelle eines jeweiligen Erhitzungsstrangs (66) einem Zustandsgrößensensor (88) des Erhitzungsstrangs (66), welcher Zustandsgrößenwerte zur Mittelwertbildung bereitstellt, nachgeschaltet ist.

46. Solarthermische Prozesswärmeanlage nach einem der Ansprüche 43 bis 45, **dadurch gekennzeichnet, dass** eine Einspritzeinrichtung (98) ein Ventil (100) zur Regelung der Einspritzmenge an flüssigem Wärmeträgermedium umfasst.

47. Solarthermische Prozesswärmeanlage nach Anspruch 46, **dadurch gekennzeichnet, dass** ein Ausgang des Ventils (100) einem Eingang einer Solarkollektoreinrichtung (92) vorgeschaltet ist.

48. Solarthermische Prozesswärmeanlage nach einem der Ansprüche 43 bis 47, **dadurch gekennzeichnet, dass** die Einspritzeinrichtung (98) einen Zustandsgrößensensor und/oder Temperatursensor (106) aufweist.

49. Solarthermische Prozesswärmeanlage nach Anspruch 48, **dadurch gekennzeichnet, dass** der Zustandsgrößensensor (106) einem Ausgang einer Solarkollektoreinrichtung (92) nachgeschaltet ist.

50. Solarthermische Prozesswärmeanlage nach einem der Ansprüche 43 bis 49, **dadurch gekennzeichnet, dass** die Einspritzeinrichtung (98) einer letzten Solarkollektoreinrichtung (92) des Erhitzungsstrangs (66) zugeordnet ist.

51. Solarthermische Prozesswärmeanlage nach einem der Ansprüche 30 bis 50, **dadurch gekennzeichnet, dass** ein oder mehrere Erhitzungsstränge (66) mindestens eine Blende (110) aufweist.

52. Solarthermische Prozesswärmeanlage nach einem der Ansprüche 30 bis 51, **dadurch gekennzeichnet, dass** ein Erhitzungsstrang (66) eine Mehrzahl von Solarkollektoreinrichtungen aufweist.

53. Solarthermische Prozesswärmeanlage nach Anspruch 52, **dadurch gekennzeichnet, dass** die Solarkollektoreinrichtungen Brennlinienkollektoren sind.

54. Solarthermische Prozesswärmeanlage nach einem der Ansprüche 30 bis 52, **dadurch gekennzeichnet, dass** der Erhitzungsabschnitt ganz oder teilweise an einem Turmreceiver angeordnet ist.

55. Solarthermische Prozesswärmeanlage nach einem der Ansprüche 30 bis 54, **gekennzeichnet durch** eine Ausbildung als solarthermisches Kraftwerk.

56. Solarthermische Prozesswärmeanlage nach Anspruch 55, **gekennzeichnet durch** eine Generatoreinrichtung (12) zur Erzeugung elektrischer Energie.

57. Solarthermische Prozesswärmeanlage nach einem der Ansprüche 1 bis 54, **gekennzeichnet durch** eine Ausbildung als Dampferzeugungsanlage.
